# EUROPEAN PATENT APPLICATION

(11) **EP 1 363 182 A1**
(43) Date of publication of application: **19.11.2003**
(21) Application number: 02712373.6
(22) Date of filing: 15.02.2002
(51) Int. Cl.: G06F 3/02

(54) **INFORMATION INPUT DEVICE**

(30) Priority: 19.02.2001 JP 2001041820
(71) Applicant: Sony Corporation, Tokyo 141-0001 (JP)
(72) Inventor: REKIMOTO, Junichi, c/o SONY COMPUTER SCIENCE, SHINAGAWA-KU, Tokyo 141-0022 (JP); TAJIMA, Shigeru, c/o SONY COMPUTER SCIENCE, SHINAGAWA-KU, Tokyo 141-0022 (JP); AYATSUKA, Yuji, c/o SONY COMPUTER SCIENCE, SHINAGAWA-KU, Tokyo 141-0022 (JP); MATSUSHITA, Nobuyuki, c/o SONY COMPUTER SCIENCE, SHINAGAWA-KU, Tokyo 141-0022 (JP); HASEGAWA, Tota, c/o SONY COMPUTER SCIENCE, SHINAGAWA-KU, Tokyo 141-0022 (JP); KARASAWA, Hidenori, c/o SONY COMPUTER SCIENCE, SHINAGAWA-KU, Tokyo 141-0022 (JP); SCIAMMARELLA, Eduardo , c/o SONY COMPUTER SCIENCE, SHINAGAWA-KU, Tokyo 141-0022 (JP)
(74) Representative: Mills, Julia
(86) International application number: JP0201281
(87) International publication number: WO02067104

(57) **Abstract**

An information input device using an electromagnetic near field to input information for an information equipment which a user is carrying. In a keyboard 12, a keycode (an output from a processor 2) is frequency modulated (FSK) by a modulator 5, only necessary carrier component passes through a filter 6, and then supplied to conductive keytops 4 via a buffer amplifier 7. The supplied signal is received at a preamplifier 10 installed in user's wearable equipment 9 using a surface of a human body and an electromagnetic near field, and then supplied to a wearable computer 11 of the wearable equipment 9 after demodulation.

## Description

### TECHNICAL FIELD

The present invention relates to a technology for inputting information into an information equipment such as a computer, a game machine or the like.

### BACKGROUND ART

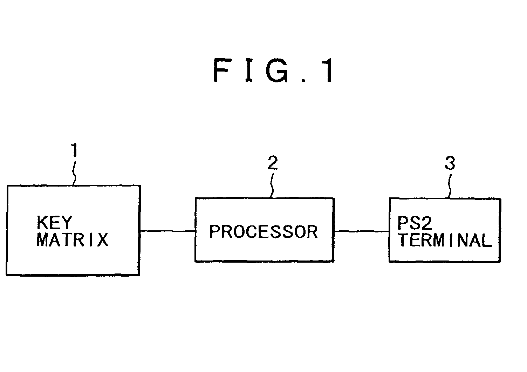

A currently used information input device (hereinafter referred to also as an input device) such as a keyboard, a mouse, a pen or the like is connected to a specified computer regardless of wired or wireless. From these input devices, information can be inputted only into the specified computer. For example, FIG.1 shows a keyboard that is currently used widely, and this keyboard is composed by including a key matrix circuit 1, a processor (a micro processor) 2 and the like. The key matrix circuit 1 is equipped with a plurality of key switches connected in matrix and these key switches are strobe-driven. Key scan is executed by the processor 2, a detection of depress the key switches is executed based on the result of the key scan, and then a corresponding keycode is outputted from a PS2 terminal 3. The output from the PS2 terminal 3 is supplied to a corresponding information equipment such as a personal computer or the like, in other words, an information equipment connected to the keyboard by wire or wireless.

On the other hand, it is very convenient if a user can easily input information into a predetermined information equipment, for example, an information equipment that user is carrying, from any input device. Here, "easiness" means that without connecting through a specific wired channel or a specific wireless channel. Suppose a keyboard is located at the place where a user is visiting, for example. It is very convenient that information is inputted directly into the information equipment that user is carrying if the user operates this keyboard, that is, without connecting the keyboard to the user's equipment. Thereby, a user can share a keyboard and does not need to carry a keyboard by himself/herself.

### DISCLOSURE OF THE INVENTION

The present invention was invented in consideration of the above circumstances, an object of the present invention is to easily input information into a desired information equipment from any information input device.

According to the present invention, in order to achieve the above mentioned object, structures as described in Claims are adopted. Here, before describing the present invention in detail, supplementary explanation about Claims is given.

The basic concept of the present invention is that when a user operates an input device by touching, the information equipment of the user who is touching is connected automatically to the mentioned information input device. According to the present invention, the information input device and the information equipment are able to be "connected" by an act of "operation by touching the equipment".

Namely, according to the present invention, in order to achieve the above mentioned object, the information input device is provided with an input operating section, a means for generating an input signal according to the operation of the input operating section, a modulating means for generating a modulation signal from the input signal and a conductive material for receiving the modulation signal and transmitting via a human body.

In the structure of the present invention, a signal inputted through the information input device can be entered into the information equipment via the conductive materials and a human body. That is, information can be inputted into the information equipment which is related to a human body, moreover, a trouble of connecting the input device and the information equipment can be avoided.

The information input device may be a keyboard, a mouse, a pen or the like and is possible to apply to various others.

Various modulations can be used such as a frequency modulation (a frequency shift keying modulation), an amplitude modulation (an amplitude shift keying modulation), a phase shift keying modulation, an amplitude phase shift keying modulation or the like.

By preparing a plurality of channels, input may be executed from a plurality of information input devices into the information equipment, and two-way transmission of a half duplex or a full duplex may be done.

As an information equipment, a wearable equipment may be favorable, but if an equipment utilizes the transmission via a human body it may be no problem if it may be equipped apart from the human body.

By the way, the present invention is able to realize not only as a device or a system, but also is able to realize as a method. Also, a part of the present invention can be designed as software, of course. It is natural that the software products (a recording medium) executing such software by a computer are also included in the technical scope of the present invention.

### BRIEF DESCRIPTION OF THE DRAWINGS

FIG.1 is a block diagram for explaining a structure of a conventional keyboard;
FIG.2 is a block diagram for explaining a structure of a first embodiment of the present invention;
FIG.3 is a time chart for explaining an operation of the first embodiment of the present invention;
FIG.4 is a view for explaining a format of digital data of the first embodiment of the present invention;
FIG.5 is a block diagram of a structure of a second embodiment of the present invention; and
FIG.6 is a block diagram for explaining a structure of a third embodiment of the present invention.

### BEST MODE FOR CARRYING OUT THE INVENTION

Hereinafter, embodiments of the present invention are described.

### [First Embodiment]

The first embodiment of the present invention is that the present invention is applied to a keyboard. In this embodiment, as described in detail below, an input signal inputted by operation of a keyboard 12 is supplied to a wearable equipment 9 carried by a user.

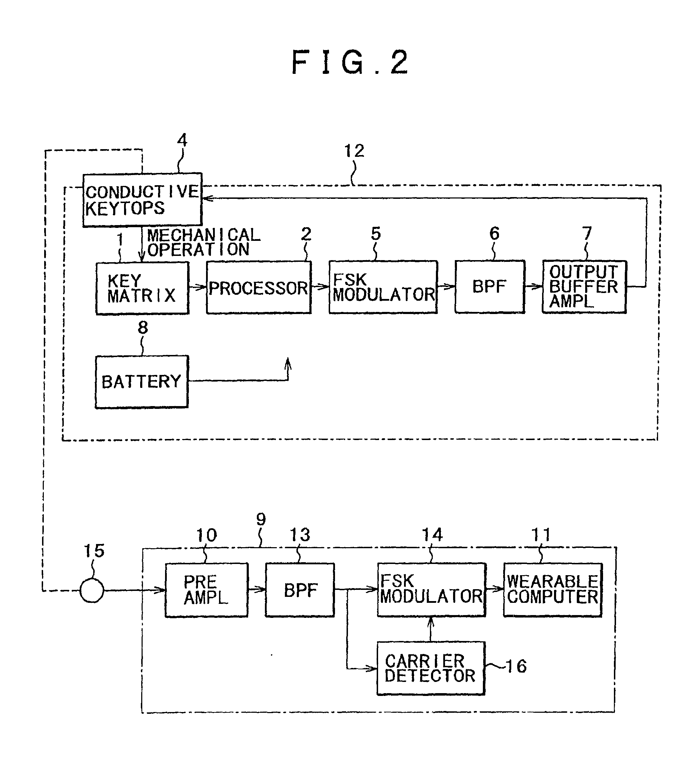

FIG.2 shows the first embodiment of the present invention as a whole. In this block diagram, corresponding numerals are put to correspond portions in FIG.1. In FIG.2, the keyboard 12 of the present embodiment comprises a key matrix circuit 1 and a processor 2 for processing the signals from the key matrix circuit 1 like the keyboard in FIG.1, and also equips with keytops 4 made of conductive materials, a modulator 5 for modulating keycodes from the processor 2 with a FSK modulation (a frequency shift keying modulation), a band-pass filter 6 and an output buffer amplifier 7. A signal from the output buffer amplifier 7 is supplied to the conductive keytops 4. A battery 8 is for supplying power.

The wearable equipment 9 is composed by including a preamplifier 10, a wearable computer 11, a band-pass filter 13, a FSK demodulator 14 and a carrier detector 16 and the like, and is connected to a human body via an electrode 15 directly or by a capacitor coupling.

The keyboard 12 and the wearable equipment 9 are connected by an electromagnetic near field as showing by a broken line when a human body touches the keytops 4 of the keyboard 12. Transmission of an electronic signal by the electromagnetic near field is a similar technique as disclosed in Japanese Patent Application Laid Open No.H7-170215.

In the keyboard 12 of the present embodiment, the keycode (an output from the processor 2) generated by a key input is frequency modulated (FSK) by the modulator 5, only necessary carrier component passes through the filter 6, and then supplied to the conductive keytops 4 via the buffer amplifier 7. The supplied signal is received at the preamplifier 10 installed in the user's wearable equipment 9 using a surface of a human body and the electromagnetic near field, and then supplied to the wearable computer 11 of the wearable equipment 9 after demodulation.

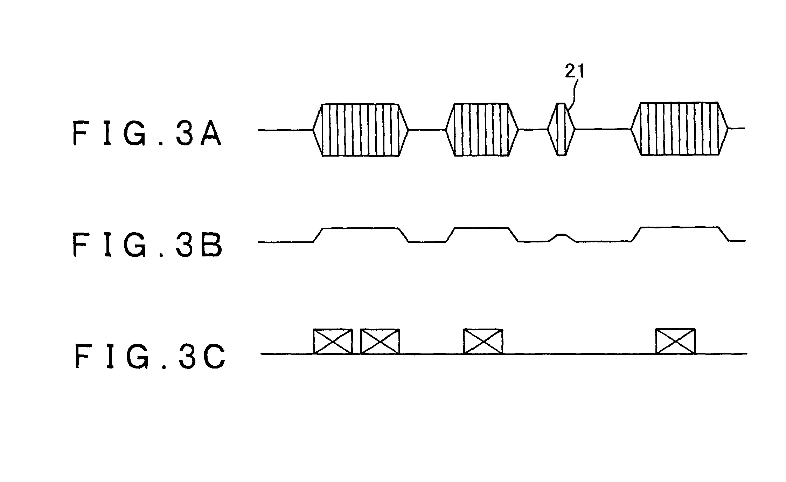

In FIG.3 shows actual signals to be transmitted. In FIG.3, a signal 3A is a carrier, which the wearable equipment 9 receives, and is generated intermittently depending on the length of touching time to the keyboard 12. A signal 3B is a carrier detecting signal, which is obtained by smoothing this, and thereby a carrier 21 generating in spike (time portion of unable to exist the keyboard data or a noise carrier) is removed. A signal 3C is a demodulated digital data comprising a keycode, a header and a footer.

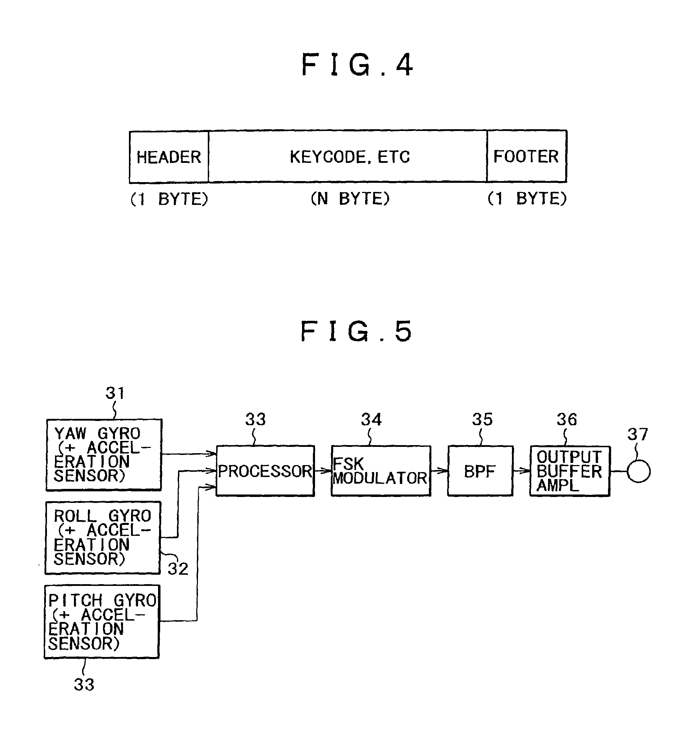

In FIG.4 shows contents of the digital data. The digital data comprises a header to be a specific code, n-bytes data part indicating a keycode and a keyboard ID and a footer (checksum) part. Although the keycode is essential information for the data part, it is possible to include ID for other keyboard. For example, if the header part is 1 byte, the data part is 8 bytes, the footer part is 1 byte, and then one data block becomes 10 bytes. While, as a bit rate of a transmission system in FIG.2, it is relatively easy to have 100kbps so that a bit rate becomes 10x8(bit)/100=0.8 second, in this case, and the time for a human to feel touching the keyboard is not a problem. In order to increase reliability, if sending a plurality of the same data, it is also not be a matter temporally. According to the present embodiment, the keyboard may be wireless, and thereby such a limitation that the keyboard is exclusively used for a specified computer can be eliminated, and this brings remarkable change in the type of usage of keyboard. Needless to say, the present invention is not only applicable to a keyboard, but also to other input devices such as a mouse, a pen and the like, in exactly the same way.

Besides, the keyboard of the present embodiment does not require a PS2 terminal in principle, and becomes a wireless because the power source is included. Of course, a PS2 terminal may be prepared in the keyboard so as to use as a regular computer input device. It is also possible to input data into both a regular computer and the wearable equipment 9 in parallel . At the present, a wireless keyboard and a wireless mouse using infrared LED are available in the market, however, a critical difference from the embodiment of the present invention is a point where "the information is transmitted to a equipment of a person who touches the equipment".

A signal electrode can be made to a whole housing of the keyboard 12 other than the keytops 4. It may acceptable to give conductively to a portion where a palm is placed upon inputting. Further, since an electrode and a human body (a hand or a finger) can operate with a capacitor coupling, it is possible to bury an electrode in a keyboard or a housing.

### [Second Embodiment]

The present embodiment is that the present invention is applied to a pen with built-in gyro.

FIG.5 shows a construction of the present embodiment as a whole. In this block diagram, corresponding numerals are put to corresponding portions in FIG.1 and FIG.2. In FIG.5, the pen of the present embodiment comprises by including a yaw direction gyro 31, a roll direction gyro 32, a pitch direction gyro 33, a processor 2, a FSK modulator 5, a band-pass filter 6 and a buffer amplifier 7. The processor 2, the FSK modulator 5, the band-pass filter 6 and the buffer amplifier 7 are the same components as in the FIG.2. The gyros 30~32 are used to detect rotational amount, and are able to use such applied vibrator a ceramic. In order to improve accuracy and stability, an acceleration sensor may be used in addition. The acceleration sensor is available by adopting a semiconductor. An angle obtained by integrating a gyro output (an angular acceleration) twice is inputted from the processor, and outputted to an electrode 37 after FM (FSK) modulation like the first embodiment. A Data format is the same as shown in FIG.4. In order to select input devices like a keyboard, a gyro pen, or the like, it is convenient to define an ID or a classification code for these input devices.

As a related art, a pen-type computer called Smart Quil (Trademark) of British Telecommunications is known. This records a track to a built-in memory of the pen, and when a dock is pushed the information is absorbed to a personal computer. This art has demerits as that: ① it is difficult to miniaturize because all functions of the pen are installed, that ② all information will be lost if lost the pen, and that ③ the track of the pen is unable to use for the operation of other devices (instead of a mouse). On the contrary, according to the present embodiment, there is wide variety of applications, wherein it is possible to creatively use a plurality of pens and the information designating which pen is used becomes additional information (take a memo with a pen of home / use a pen of meeting room, for example).

### [Third Embodiment]

By applying a plurality of carrier frequencies, a plurality of information input devices can be operated at the same time. The third embodiment of the present invention is such that a plurality of carrier frequencies are prepared as mentioned.

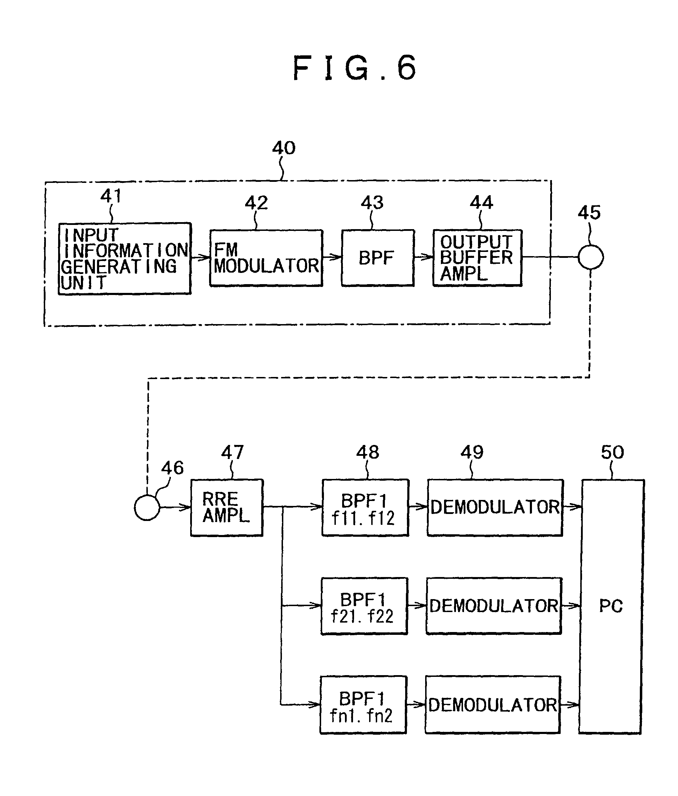

FIG.6 shows the present embodiment as a whole. However, information input device is shown only n-th one. The other information input devices are also comprised as similar way. Also, in the FIG.6, the corresponding numerals are put to the correspond portions in FIG.1 and FIG.2.

In FIG.6, the n-th information input device 40 comprises by including an input information generating unit 41, a FM modulator 42, a band-pass filter 43 and a buffer amplifier 44. Modulation carrier frequencies of the FM modulator 42 are fn1 and fn2. Other devices have common structure except having other carrier frequencies. The input information generating unit 41 is a unit for generating input information (for a computer) corresponding to functions inherent in each device, and if it is a keyboard, it is a keycode generating section. An output from the buffer amplifier 44 is supplied to an electrode (conductive material) 45. The electrode 45 is formed at an operating section or a surface of the housing or inside the information input device 40.

On the contrary, a wearable equipment 60 at receiving side comprises an electrode 46, a preamplifier 47, a band-pass filter 48 per the information input device 40, an FM demodulator 49 per the information input device 40 likewise and a wearable PC 50. After amplifying a corresponding frequency band by the preamplifier 47, determining the information input device by the band-pass filter 48 for passing each specified frequency, and then is demodulated by the FM demodulator 49 respectively. A demodulated signal is inputted into the PC 50, and then a type of devices is determined by respective ports. Or, by allocating ID to each device, the device is determined with the ID.

It is apparent from a feature of the present embodiment, in this method, it is possible to make a plurality of information input devices to be wireless at the same time, and for example, portable things such as a pair of maracas or a pair of drumsticks can be applicable as an input device. It is very difficult to use if they are wired, so this application is one of useful applications of the present invention. Also, as an input device, it is possible to apply to a game machine or a toy instead of a PC.

Meanwhile, the present invention is not only limited to the above mentioned embodiments, but also possible to apply to various arrangements within a scope of effect.

For example, a wearable display device (a monitor) may be adopted as a display device of an information equipment for receiving information input from the information input device of the present invention. For example, a headmount type display device may be connected to a wearable PC. The fact that a signal is transmitted by touching, which is a feature of the present invention, changes drastically a paradigm of an information input device in which a keyboard, a mouse or a pen is connected to a specified computer. In the same way, it is very convenient if a portable output monitor (a headmount type) is adopted as an output monitor different from a conventional type. In this case, a headmount type display device of SVGA may be connected to a monitor output terminal of a wearable PC (a conventional type of VGA connector, for example).

Furthermore, a non-wearable equipment such as a desk top type or a notebook type information equipment may be connected via a human body in an electromagnetic near filed or the like, and information may be inputted by the information input device of the present invention to the above non-wearable equipments instead of a wearable equipment or in parallel.

In this case, an information input device with various IDs can be used effectively. This is an application to a current desktop type personal computer and taken over current using condition. A keyboard, a mouse, a pen or the like, has a signal modulating means (and, certainly, has a data generating means for generating data inherent in the information input device) according to the present invention, and these signals are transmitted to a main body of a personal computer via a wristband on a wrist, for example. The equipment of receiving side of the present invention (a preamplifier or the like) and a decoder (a modulator or the like) are produced by PCI (Peripheral Component Interconnect) card or the like, and a FSK modulated signal is transmitted to an information input device, a user (a human body), and a personal computer sequentially. In this time, a duplex communication is certainly possible and also a duplex such as a half duplex and full duplex are possible. In this mounting as mentioned, when varieties of pens are simultaneously used while using a keyboard or a mouse, it becomes very close to a way of using in the real world. For example, it is like creatively use a plurality of brushes when drawing a picture.

In this system, it is possible to attempt a diversification of an information input device.

Also, it is possible to combine with a pen for generating stroke information. For example, by setting up an acceleration sensor so as to detect x axis and y axis and detecting a relative stroke of the pen, the data is transmitted via a human body. In this case, a refill for a ballpoint pen or a lead for a pencil is put into a pen. Things to be written may be a paper (blank side of a used paper or a small peace of paper are acceptable). In this technique, inputting into a personal computer becomes equivalent to writing on a paper with a pencil which has thousands of years of history.

Or, by transmitting information of an optical mouse, which is recently sold in a market, (movement of pattern on a paper, a desk or the like on which a mouse is put converts to change of x and y. Accordingly, it does not mention where it is moved basically.) via a human body, track of actual movement of the mouse on a paper can be detected and recorded. Since this is, of course, a mouse, a signal may be simply interpreted as a stroke input of a text or a picture. Also for this, it can be combined with a real pen, and it is prefer to write on a new side of a paper all the time. (As it becomes more black, it becomes harder to read as a mouse and hard to trace what is written.)

As a toy for a child, there is a kind of notebook containing a plastic film and a sheet made of adhesive materials. An input device using with the above mentioned optical touch pad pen can be fabricated by making the plastic film part of an ordinary semitranslucent paper.

### INDUSTRIAL APPLICABILITY

As described above, according to the present invention, it is very convenient that information can be inputted into an information equipment which is related to a human body of operator by touching an information input device. The information input device can input information to the information equipment corresponding to an operator, and does not become a proper to a specified information equipment. Accordingly, an information input device can be used effectively and handy to use.

## Claims

1. An information input device **characterized by** comprising:
an input operating section;
a means for generating an input signal corresponding to the operation with said input operating section;
a modulating means for generating a modulation signal from the input signal; and
a conductive material for receiving said modulation signal and for transmitting said modulation signal via a human body.

2. The information input device according to Claim 1, wherein said input operating section includes keytops, and said conductive material is provided on said keytops or a surface of a housing of a main body of said information input device.

3. The information input device according to Claim 1, wherein said input operating section includes keytops, and
said conductive material is provided on said keytops or inside of a housing of a main body of said information input device as an electrode.

4. The information input device according to Claim 1, wherein said input operating section includes a main body of a mouse device, and
said conductive material is provided on at least a part of a surface of said main body of the mouse device.

5. The information input device according to Claim 1, wherein said input operating section includes a main body of a mouse device, and
said conductive material is provided on inside of said main body of the mouse device as an electrode.

6. A computer system **characterized by** comprising:
an information input device and a wearable computer having an electrode to be connected to a human body directly or by capacitor coupling;
wherein said information input device is comprised of an input operating section;
a means for generating an input signal corresponding to the operation with said input operating section;
a modulating means for generating a modulation signal from the input signal; and
a conductive material for receiving said modulation signal and transmitting said modulation signal via a human body; wherein
said modulation signal inputted via said electrode is set to be a processing object data for said wearable computer by demodulation.

7. The computer system according to Claim 6,
wherein different modulating carriers are assigned to a plurality of said information input devices, and said different modulation signals obtained by modulating said different modulation carrier are supplied to said wearable computer.
